# EUROPÄISCHE PATENTSCHRIFT

(11) **EP 1 852 285 B1**
(45) Veröffentlichungstag und Bekanntmachung des Hinweises auf die Patenterteilung: **24.11.2010**
(21) Anmeldenummer: 07008741.6
(22) Anmeldetag: 30.04.2007
(51) Int. Cl.: B60H 1/00

(54) **Vorrichtung zur Steuerung einer Strömung durch einen Strömungskanal**
Device for controlling a flow in a flow channel
Dispositif destiné à la commande d'un écoulement par un conduit d'écoulement

(30) Priorität: 04.05.2006 DE 102006021009
(43) Veröffentlichungstag der Anmeldung: 07.11.2007
(73) Patentinhaber: Behr GmbH & Co. KG, 70469 Stuttgart (DE)
(72) Erfinder: Wolf, Walter, Dipl.-Ing., 71570 Oppenweiler-Zell (DE)

(56) Entgegenhaltungen:
- WO-A-2004/041566
- DE-A1- 19 826 706
- GB-A- 820 714

## Beschreibung

Die Erfindung betrifft eine Vorrichtung zur Steuerung einer Strömung durch einen aus einem verformbaren Material gebildeten Strömungskanal, insbesondere eines Luftführungskanals einer Klimaanlage in einem Fahrzeug.

Üblicherweise werden Fahrzeug, z. B. Land-, Wasser- oder Luftfahrzeuge, insbesondere deren Innenraum beheizt oder klimatisiert. Hierzu sind im Allgemeinen mehrere Strömungskanäle mit an mehreren, als geeignet erachteten Stellen angeordneten Strömungsauslässe oder Ausströmern vorgesehen. Die Strömungskanäle sind mit einer Heizungs- und/oder Klimaanlage verbunden. Hierdurch ist ein großer Bauraum erforderlich. Bedingt durch eine in der Fahrzeugstruktur, -karosserie und/oder -außenhaut verlaufende Anordnung der Strömungskanäle ist der verfügbare Bauraum sehr begrenzt. Eine Verkleinerung des Kanalquerschnitts bedingt eine Erhöhung der Strömungsgeschwindigkeit eines durch den Strömungskanal fließenden Fluids, welches wiederum zu einer Geräuscherhöhung und somit zu einer erheblichen Beeinträchtigung des Komforts führt.

Darüber hinaus bestehen die Strömungskanäle üblicherweise aus gespritztem harten formstabilen Schalen, die mit einer Tragstruktur, z. B. einem Querträger oder einem Verkleidungsteil verbunden sind. Auch sind die Strömungskanäle als Blasformteile ausgeführt. Hierdurch ergibt sich ein entsprechend hohes Gewicht, welches aus der Wandstärke resultiert. Ferner ist die Herstellung derartig ausgebildeter Strömungskanäle sehr aufwendig und kostenintensiv.

Aus der DE 102 51 760 A1 ist eine einfache und raumsparende sowie kostengünstige Vorrichtung zur Luftverteilung im Innenraum eines Fahrzeugs bekannt, wobei ein als ein Mehrkammerkanal ausgebildeter Strömungskanal vorgesehen ist, der aus einem zumindest teilweise verformbaren Material gebildet ist. Zur Strömungseinstellung sind aufwendige Klappen und Stellelemente vorgesehen. Die GB 820 714 A zeigt eine Vorrichtung gemäß Oberbegriff des Anspruchs 1.

Der Erfindung liegt die Aufgabe zugrunde, ein Verfahren und eine Vorrichtung zur Steuerung einer Strömung durch einen Strömungskanal anzugeben, weiche besonders einfach und raumsparend sowie kostengünstig und mit einem gegenüber dem Stand der Technik geringeren Gewicht ausgebildet ist.

Die Aufgabe wird erfindungsgemäß gelöst durch die Merkmale des unabhängigen Anspruchs 1. Vorteilhafte Weiterbildungen der Erfindung sind Gegenstand der Unteransprüche.

Erfindungsgemäß umfasst die Vorrichtung zur Steuerung einer Strömung durch einen aus einem verformbaren, insbesondere duktilen oder elastischen Material gebildeten Strömungskanal mindestens zwei Stellelemente die zwischen einer ersten vollständig schließenden Endlagenstellung und einer zweiten vollständig öffnenden Endlagenstellung in eine beliebige Zwischenstellung stellbar sind und die zur Einstellung der Strömungsmenge durch den Strömungskanal dessen Querschnitt bogenförmig einschnüren. Eine derartige Vorrichtung ermöglicht eine weitgehend homogene Einschnürung und bildet somit eine strömungsgünstige Verschluss- und Drosseleinrichtung für den Strömungskanal. Je nach Anordnung der Vorrichtung im bzw. am Strömungskanal kann die Vorrichtung als Lüftungsdüse mit zentralem und diffusem Austritt eingesetzt werden.

Erfindungsgemäß sind mindestens zwei zueinander korrespondierende Stellelemente vorgesehen, die in der ersten vollständig schließenden Endlagenstellung weitgehend formschlüssig und in der zweiten vollständig öffnenden Endlagenstellung mit einem zumindest dem Querschnitt des Strömungskanals entsprechenden Abstand zueinander angeordnet sind. Beim Einschnüren des Kanalquerschnitts werden die beiden schwenkbaren Stell- oder Bügelelemente zueinander hin geschwenkt oder gedreht bis hin zum vollständigen Formschluss, bei welchem zwischen den beiden Bügelelementen der Strömungskanal vollständig gefaltet, eingequetscht oder eingeschnürt ist. Dabei können die zwei Stellelemente synchron oder asynchron zueinander zur Strömungskanalmitte hin bewegbar angeordnet sein. Zusätzlich zur drehbaren oder schwenkbaren Halterung bzw. Lagerung des Stellelements kann dieses auch in Richtung Wandung des Strömungskanals linear bewegbar gehalten sein.

Erfindungsgemäß ist der in Strömungsrichtung horizontale Versatz der Achspositionen der gegenüberliegenden Stellelemente. Eine derartige versetzte Anordnung des ersten Stellelements zum zweiten Stellelement bewirkt eine höhere Dichtheit in Art einer Labyrinthdichtung, da jedes Stellelement um einen größeren Winkelweg verschwenkt werden kann, als bei übereinanderliegenden Achsen. Der Strömungskanal wird durch das Zusammenschwenken der Stellelemente nicht nur zwischen diesen eingepresst, sondern auch verwunden. In diesem Ausführungsbeispiel können das erste und das zweite Stellelement baugleich ausgeführt werden.

In einer bevorzugten Ausführungsform sind die Stellelemente in Art eines Bügelelements mit mindestens einem oder mehreren bogenförmigen, parallel nebeneinander liegenden Abschnitten ausgebildet. Dabei werden die Bügelelement derart gedreht oder geschwenkt, dass der Strömungskanal teilweise oder bis zum vollständigen Verschluss des Kanalquerschnitts eingeschnürt ist. Durch die zumindest teil- oder bereichsweise Ein- bzw- Abschnürung des Kanalquerschnitts ergibt sich eine einfache Drossel- und/oder Absperrfunktion.

Um möglichst die Strömung durch den Strömungskanal nicht zu beeinflussen, sind die Stellelemente in der Wand eines den Strömungskanal umgebenden Tragkanals gehalten, insbesondere angelenkt. Dabei sind die Stellelemente zumindest an einem als Achsteil dienenden und insbesondere abgewinkelten Bügelende mit einem außerhalb des Tragkanals angeordneten Antrieb verbunden. Hierzu ist die Wandung des Tragkanals mit Öffnungen versehen. Die Öffnungen liegen bei einem zweischaligen Tragkanal vorzugsweise in der Trennebene der beiden Halbschalen.

In einer möglichen Ausführungsform sind die Stellelemente in den Strömungskanal integriert, insbesondere in dessen Wandung eingebettet. Dies ist eine möglichst raumsparende Anordnung. Darüber hinaus ermöglicht diese Anordnung ein einfaches Rückführen des eingeschnürten Strömungskanals in seinen Ausgangszustand mit einem vollständig geöffneten Kanalquerschnitt. Mit anderen Worten: Der Strömungskanal wird mit Öffnen der Stellelemente zwangsweise geöffnet bzw. entfaltet.

Alternativ zur integrierten Anordnung können die Stellelemente den Strömungskanal zumindest teilweise oder vollständig umgebend angeordnet sein. Vorzugsweise liegen die Stellelemente formschlüssig an der äußeren Wandung des Strömungskanals an. In dem zwischen der Wand des Strömungskanals und der Wand des Tragkanals gebildeten Freiraum ist eine einfache und raumsparende Anordnung der Stellelemente ermöglicht. Alternativ kann der Tragkanal oder die Tragstruktur eine zumindest teilweise oder vollständig radial umlaufende Nut aufweisen. Bei einem nicht erfindungsgemäßen einzelnen Bügelelement zum Öffnen und Verschließen des Kanalquerschnitts ist die Nut die innere Wandung des Tragkanals halbumlaufend ausgebildet. Bei zwei den Kanalquerschnitt ein- bzw. abschnürenden Bügelelementen verläuft die Nut vollständig umlaufend in der inneren Wandung des Tragkanals.

Erfindungsgemäß weisen die Stellelemente eine Kontur auf, die der Querschnittsform des Strömungskanals in der zweiten vollständig öffnenden Endlagenstellung weitgehend entspricht. Dies ermöglicht eine weitgehend raumsparende Ablage der Stellelemente.

In einer weiteren Ausführungsform können in Strömungsrichtung mehrere Paare von Stellelementen hintereinander angeordnet sein. Durch einen daraus resultierenden Welleneffekt bzw. Redundanz von Dichtstellen verbessert sich die Dichtheit des Strömungskanals beim Verschließen des Kanalquerschnitts durch alle Stellelemente. Eine derartige Anordnung der Stellelemente wirkt dabei in Art einer Labyrinthdichtung.

Bedingt durch die weitgehend raumsparende und formschlüssige Ausbildung der Stellelemente kann dieses in einem geradlinig verlaufenden Bereich, einem Umlenkungsbereich, einem Eintrittsbereich und/oder einem Austrittsbereich des Strömungskanals angeordnet sein. Dabei sind die Stellelemente aus einem weitgehend formfesten Material, insbesondere einem Metall oder einem Polymerwerkstoff gebildet. Beispielsweise sind die Stellelemente aus einem rohrförmigen Hohl- oder Vollprofil, insbesondere einem Drahtbügel gebildet. Auch können die Stellelemente zumindest geringfügig elastisch ausgebildet sein. Dies ermöglicht eine einfache Montage für Positionen innerhalb des Tragkanals oder bei einer Montage in einem geschlossenen Kanal. Dabei sind die Stell- oder Bügelelemente in Querrichtung geringfügig elastisch ausgebildet. Seitliche oder die halb bzw. vollständig umlaufenden Nuten in der Wandung des Tragkanals erleichtern das Einführen in die Stellposition im Tragkanal. Alternativ zur elastischen Ausbildung der Stellelemente kann dieses über Führungsnuten oder andere geeignete Mittel in Position gebracht werden. Vorzugsweise sind die Stellelemente über seitlich in den Tragkanal eingebrachte Elemente, beispielsweise Clips, Schraube mit Bund und Zentrierung, oder ein anderes geeignetes Element, fixiert und/oder gelagert. Das Element dient einer axial und radial drehbaren Fixierung bzw. Lagerung der Stellelemente.

Der Strömungskanal kann eine runde, eine rechteckige oder eine polygonale Querschnittsform mit vorzugsweise zwei Symmetrieachsen aufweisen. Je nach Querschnittsform des Strömungskanals weisen die Stellelement eine zugehörige Kontur auf.

Für eine verformbare, insbesondere duktile oder elastische Ausbildung des Strömungskanals ist dieser vorzugsweise aus einer Folie, einem Gewebe und/oder einer netzförmigen Struktur ein- oder mehrlagig gebildet. Dabei kann nur eine Folie oder eine Folie mit einem Gewebe oder einer netzförmigen Struktur vorgesehen sein. Die Folie kann mit einem oder mehreren Stellelementen lokal verstärkt sein, so dass sich der Strömungskanal in einfacher Weise vollständig entfaltet. Auch kann die Folie oder das Gewebe starr, ein- oder mehrlagig, luftdicht beispielsweise als ein Schlauch extrudiert oder aus einer Folie zu einem Schlauch geformt oder im so genannten Twin-Sheet-Verfahren zu einem Strömungskanal geformt werden. In dem schlauchförmigen Strömungskanal werden ein oder mehrere als jeweils Stellelement ausgebildete Drähte oder Profile integriert, um die Rückstelleigenschaften des Strömungskanals zu erhöhen. Mit anderen Worten: Der Strömungskanal, insbesondere dessen Wandung kann aus beliebigen unterschiedlichen Lagen und Schichten bestehen. Hierdurch lassen sich akustische und thermische, insbesondere isolierende Eigenschaften beliebig einstellen und auch bereichsweise ändern bzw. anpassen.

Alternativ zur Entfaltung des Strömungskanals durch das Öffnen der Stellelemente kann der Strömungskanal aus einem derartigen Material gebildet sein, das beim Lösen der Einschnürung selbsttätig in die Ausgangslage zurückgeht. Darüber hinaus kann der Strömungskanal durch Bewegen der Stellelemente in die erste vollständig öffnende Endlagenstellung über Luftdruck oder über Formschluss mit den Stellelementen in seine Ausgangslage zurückgehen. Beispielsweise kann warme Luft in den Strömungskanal eingeblasen werden, wodurch der eingeschnürte Strömungskanal aufgeblasen und in seine Ausgangslage zurückgeht.

Vorzugsweise ist der Strömungskanal mit einer oder mehreren Falten, insbesondere u-förmige, z-förmige oder w-förmige Falten, versehen. Eine derartige Ausbildung des Strömungskanals ermöglicht ein einfaches und präzises Falten und Entfalten des Kanalquerschnitts. Alternativ kann der Strömungskanal durch das eingesetzte verformbare Material eine derartige Flexibilität, insbesondere Elastizität aufweisen, dass Falten und dadurch Geräuschbildung im Strömungskanal vermindert sind.

Die mit der Erfindung erzielten Vorteile bestehen insbesondere darin, dass durch eine den Strömungskanal bogenförmige Einschnürung eine weitgehend homogene und somit strömungsgünstige Verschluss- und Drosselfunktion im Kanal gegeben ist. Durch die verformbare Ausbildung des Strömungskanals ist dieser als Leichtbaukanal einsetzbar. Die bogen- oder bügelförmige Ausbildung des Stellelements ermöglicht eine raumsparende Anwendung in runden, halbrunden oder annähernd runden Strömungskanälen. Auch kann der Strömungskanal einen beliebigen Wandaufbau beispielsweise in einer so genannten mehrlagigen Sandwich-Bauweise aufweisen. Auch kann der Strömungskanal nur bereichsweise mehrlagig ausgebildet sein. Die Vorrichtung ist in nahezu beliebigen Querschnittsformen des Strömungskanals mit wenigstens einer Symmetrieachse (= Drehachse) einsetzbar. Die Stellelemente sind als Drahtbügel besonders einfach herstellbar. Bei flachen Kanalquerschnitten ist die Montage von einer Seite durch einen schmalen Schlitz möglich, so dass auch ein einfacher Wartungs- und Servicezugang gegeben ist.

Ausführungsbeispiele der Erfindung werden anhand einer Zeichnung näher erläutert. Darin zeigen:
- Fig. 1: in perspektivischer Darstellung einen Strömungskanal mit einer als ein bügelförmiges Stellelement ausgebildeten nicht erfindungsgemäßen Vorrichtung zur Strömungssteuerung in einer ersten vollständig schließenden Stellung,
- Fig. 2: in perspektivischer Darstellung das nicht erfindungsgemäße Stellelement in der zweiten vollständig öffnenden Stellung,
- Fig. 3: im Längsschnitt den Strömungskanal mit dem nicht erfindungsgemäßen drehbar gelagerten Stellelement,
- Fig. 4 bis Fig. 7: in perspektivischer Darstellung ein weiteres nicht erfindungsgemäßes Beispiel für ein Stellelement,
- Fig. 8 bis Fig. 10: in perspektivischer Darstellung einen Strömungskanal mit einem rechteckigen Kanalquerschnitt und einem entsprechend ausgebildeten erfindungsgemäßen Stellelement,
- Fig. 11 bis 14: in perspektivischer Darstellung eine aus zwei Stellelementen gebildete erfindungsgemäße Vorrichtung für einen rechteckförmigen Strömungskanal,
- Fig. 15 bis 18: in perspektivischer Darstellung eine aus zwei Stellelementen gebildete erfindungsgemäße Vorrichtung für einen rechteckigen Strömungskanal, und
- Fig. 19: im Querschnitt eine Anordnung eines nicht erfindungsgemäßen Stellelements in einem Umlenkungsbereich des Strömungskanals.

Einander entsprechende Teile sind in allen Figuren mit den gleichen Bezugszeichen versehen.

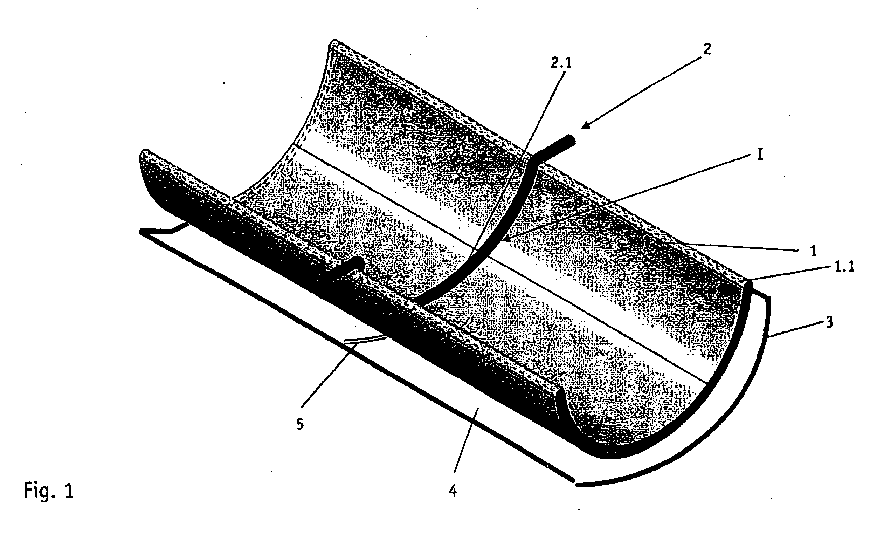

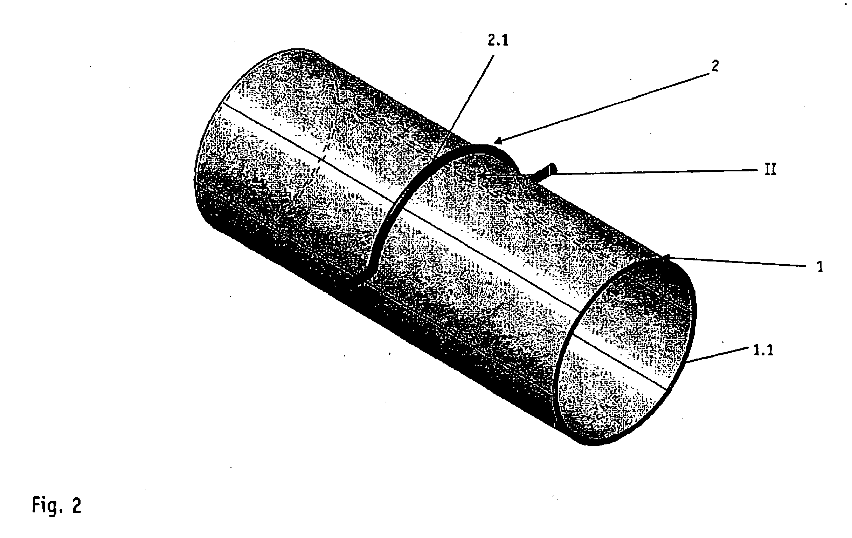

Figur 1 zeigt in perspektivischer Darstellung einen Strömungskanal 1 mit einer als ein bügelförmiges Stellelement 2 ausgebildeten Vorrichtung zur Strömungssteuerung. Das Stellelement 2 ist in einer ersten, den Strömungskanal 1 vollständig schließenden Stellung I gezeigt. Figur 2 zeigt den Strömungskanal 1 in der zweiten vollständig öffnenden Stellung II. Der Strömungskanal 1 dient beispielsweise als ein Luftführungskanal für eine Heizungs- oder Klimaanlage in einem Fahrzeug.

Der Strömungskanal 1 ist für eine derartige Anwendung beispielsweise von einem Tragkanal 3, z. B. einem Fahrzeugquerträger, umgeben. Beim Einbau in den Tragkanal 3 wird die Verformung des Strömungskanals 1 beispielsweise durch nicht näher dargestellte Elemente, wie z. B. Innenwände, des Tragkanals 3 verhindert. Vorzugsweise ist daher der Strömungskanal 1 aus einem verformbaren Material, insbesondere einem Schaumkanal. Beispielsweise ist der Strömungskanal 1 aus einem Gewebe, einer Folie und/oder einer netzförmigen Struktur gebildet. Der Strömungskanal 1 kann ein- oder mehrlagig ausgebildet sein. Der Strömungskanal 1 kann als Schlauch extrudiert sein oder aus einer Folie zu einem Schlauch oder im so genannten Twin-Sheet-Verfahren zu einem Kanal geformt sein. Als Materialien für den verformbaren Strömungskanal können beispielsweise Elastomere, Gummi, geschäumte Kunststoffe oder ähnliches Verwendung finden. Bei einer Verwendung des Strömungskanals 1 als Luftführungskanal für eine Klimaanlage im Fahrzeug weist der Strömungskanal 1 zudem eine hohe Druckfestigkeit von ca. 1 bar Überdruck, eine hohe Temperaturbeständigkeit von -35°C bis 85°C, insbesondere maximal 120°C auf. Beim Einschnüren des Strömungskanals 1 dürfen die Wände infolge Feuchtigkeit und/oder Wärme nicht gegenseitig verkleben. Hierzu weist der Strömungskanal 1 eine Mindest-Wandstabilität auf. Darüber hinaus ermöglicht die hohe Elastizität der Wandung 1.1 des Strömungskanals 1 die Faltenbildung und somit eine Geräuschbildung.

Der Strömungskanal 1 wird bei der Montage in den Tragkanal 3 eingezogen und entfaltet sich in der gewünschten Position selbsttätig. Alternativ kann der Strömungskanal 1 durch Einblasen von Luft in Form und in seine Ausgangslage der vollständig öffnenden Stellung II gebracht werden. Auch kann der Strömungskanal 1 durch Drehen oder Schwenken des Stellelements 2 in seine Ausgangslage gebracht werden. Hierzu kann das Stellelement 2 in die Wandung 1.1 des Strömungskanals 1 integriert sein oder in ein an der Wandung 1.1 in nicht näher dargestellter Art und Weise angebrachten Element eingreifen, so dass sich der Strömungskanal 1 zwangsweise entfaltet.

Für eine einfache Drossel- und/oder Absperrfunktion im Strömungskanal 1 wird dieser mittels des Stellelements 2 durch Drehen bzw. Schwenken in die erste vollständig schließende Stellung I oder eine Zwischenstellung bogenförmig eingeschnürt. Hierzu ist das Stellelement 2 in einer einfachen Form als ein Bügelelement mit mindestens einem bogenförmigen Abschnitt 2.1 (im Weiteren Bogen 2.1 genannt) ausgebildet. Dies ermöglicht eine homogene Einschnürung und somit strömungsgünstige Drossel- bzw. Absperrfunktion. In der ersten Stellung I des Stellelements 2 in Figur 1 ist der Strömungskanal 1 total verschlossen und in der zweiten Stellung II in Figur 2 vollständig geöffnet.

Für ein einfaches und präzises Einschnüren bzw. Falten des Strömungskanals 1 kann dieser zusätzlich mit u-förmigen, z-formigen und/oder w-förmigen Knickfalten in nicht näher dargestellter Art und Weise versehen sein, die beispielsweise in Längs- und Querrichtung verlaufen.

Um die Strömung im Strömungskanal 1 nicht durch Klappen- oder Steuerungselemente zu behindern, ist das Stellelement 2 im Freiraum 4 zwischen dem Strömungskanal 1 und dem Tragkanal 3 angeordnet. Dabei kann der Tragkanal 3 in nicht näher dargestellter Art und Weise zusätzlich Ausnehmungen am Umfang aufweisen, um das Stellelement 2 aufzunehmen, so dass der Kanalquerschnitt des Strömungskanals 1 nicht begrenzt oder verkleinert wird. In einer einfachen Ausführungsform kann der Tragkanal 3 umlaufende Nuten 5 aufweisen, die zum einen als Aufnahme des Stellelements 2 in der Stellung II und die zum anderen der Montage und Positionierung des Stellelements 2 im Strömungskanal 1 dienen.

Zur Positionierung und Montage des Stellelements 2 im Strömungskanal 1 kann dieser geringfügig elastisch ausgebildet sein. Beispielsweise kann das Stellelement 2 aus einem Draht gebogen oder aus einem Polymerwerkstoff hergestellt sein. Auch können seitliche Nuten oder Anschläge in der Wandung des Tragkanals 3 zum Führen und Positionieren des Stellelements 2 vorgesehen sein. Z. B. kann das Stellelement 2 im Strömungskanal 1 mittels eines Clips oder einem anderen geeigneten Mittel axial und radial drehbar fixiert sein.

Vorzugsweise weist der Tragkanal 3 in nicht näher dargestellter Art und Weise Öffnungen auf, welche die Lagerung für eine Drehbewegung des bügelförmigen Stellelements 2 übernehmen. Dabei wird von außen an einem als Achsteil dienenden Bügelende des Stellelements 2 in nicht näher dargestellter Art und Weise ein Antrieb, z. B. ein Elektromotor, angeschlossen. Die Öffnungen liegen bei einem 2-schaligen Aufbau des Tragkanals 3 vorzugsweise in der Trennebene der beiden Halbschalen. Das angetriebene Bügelende des Stellelements 2 ist vorzugsweise abgewinkelt.

In nicht näher dargestellter Art und Weise können mehrere Stellelemente 2 in Strömungsrichtung hintereinander am Strömungskanal 1 angeordnet sein. Dies ermöglicht eine hohe Strömungsdichtheit in Art einer Labyrinthdichtung. In einer alternativen Ausführungsform kann das Stellelement 2 auch in der Wand 1.1 des Strömungskanals 1 integriert sein.

Zur besseren Übersichtlichkeit ist in den nachfolgenden Zeichnungen der Tragkanal 3 nicht dargestellt.

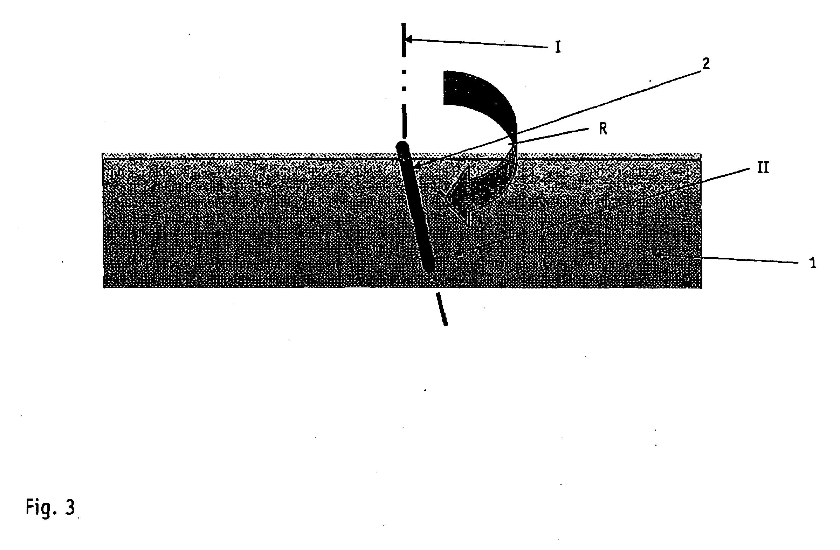

Figur 3 zeigt den Strömungskanal 1 im Längsschnitt mit dem drehbar gelagerten Stellelement 2, der in Richtung R dreh- oder schwenkbar gelagert ist. Das Stellelement 2 kann soweit gedreht werden, dass der Strömungskanal 1 vollständig eingeschnürt wird in der Stellung II oder vollständig geöffnet wird in der Stellung I. Mit anderen Worten: Der Strömungskanal 1 kann bereichsweise abgedrückt werden, wodurch sich eine einfache Drossel- und/oder Absperrfunktion ergibt.

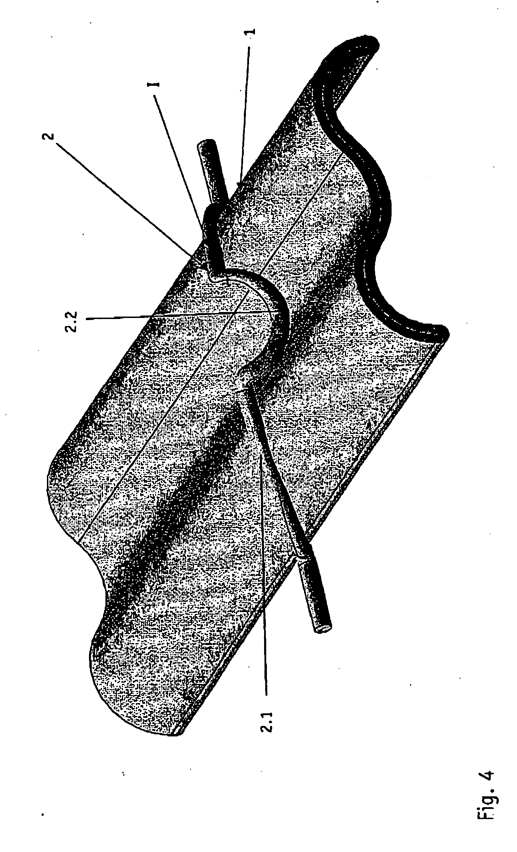

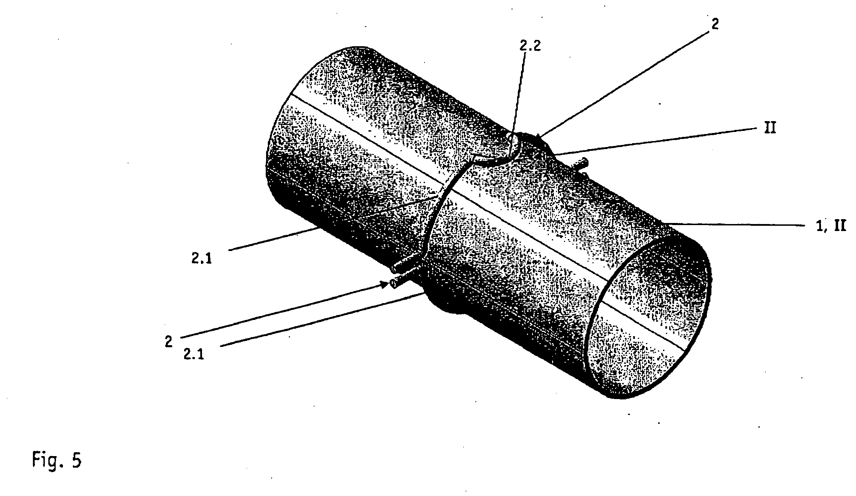

Figuren 4 bis 7 zeigen in perspektivischer Darstellung eine weitere Ausführungsform für ein Stellelement 2 mit einem radial an der Außenfläche des Strömungskanals 1 verlaufenden Bogen 2.1. Der Bogen 2.1 verläuft entlang des halben Umfangs des Strömungskanals 1 und weist etwa in seiner Mitte eine bogenformige Ausbuchtung 2.2 auf, wobei der Bogen 2.1 sowohl in seinem Ausbuchtungsbereich als auch in seinen übrigen Bereichen weitgehend formschlüssig am Strömungskanal 1 anliegt. Hierdurch ist eine mehrfache, bogenförmige Einschnürung oder Faltung des Kanalquerschnitts des Strömungskanals 1 möglich, die insbesondere im Falle, der in den Figuren 5 bis 7 dargestellten Ausführung eine hohe Dichtheit in Art einer Labyrinthdichtung sicherstellt.

Figur 4 zeigt das Stellelement 2 in vollständig geschlossener Stellung I, wobei der Strömungskanal 1 oder der Tragkanal 3 eine entsprechend angepasste Form aufweisen muss, um ein vollständiges Schließen zu gewährleisten.

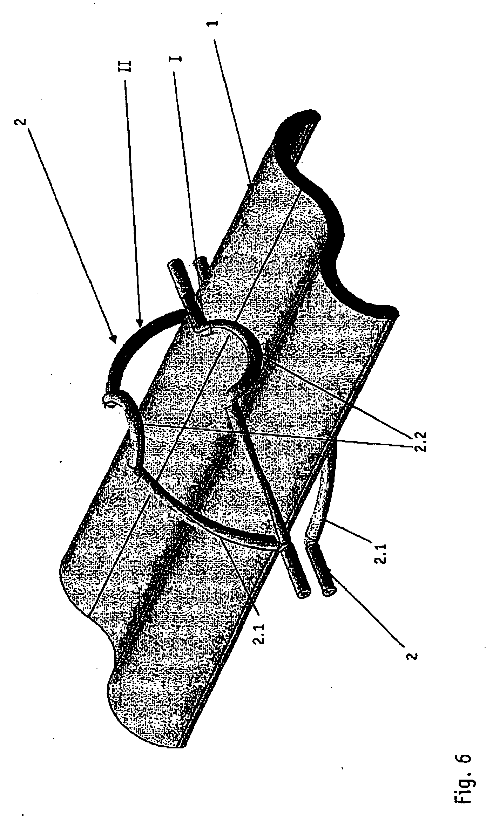

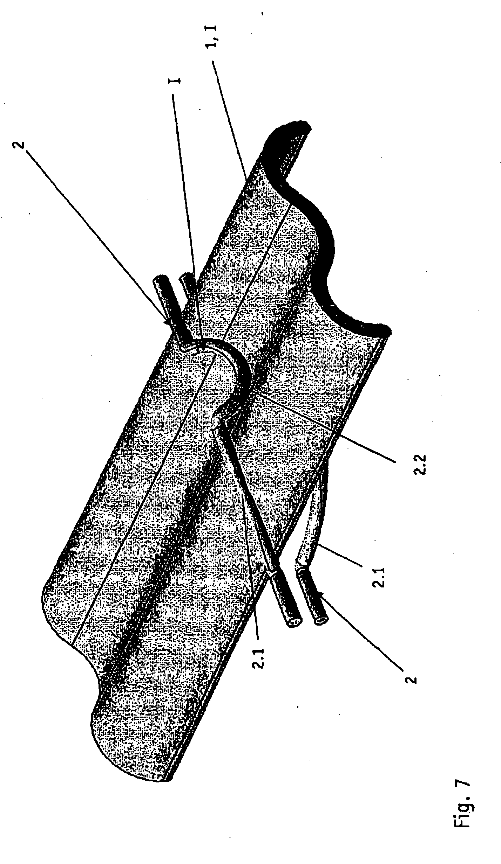

Figur 5 zeigt zwei nicht erfindungsgemäße korrespondierende Stellelemente 2, die den Strömungskanal 1 vollständig umschließen. Dabei ist ein Bügel- oder Stellelement 2 oberhalb und das andere unterhalb des Strömungskanals 1 angeordnet. Das untere Stellelement 2 weist ebenfalls einen Bogen 2.1 auf, der mit zwei nicht näher dargestellten Ausbuchtungen 2.2 ausgebildet ist, die die wellenförmige Einschnürung des Strömungskanals 1 in der Stellung I ermöglichen. Die Stellelemente 2 sind in der Stellung II - AUF - dargestellt. Die Stellelemente 2 können den Strömungskanal 1 zur Kanalmitte synchron oder asynchron einschnüren und somit die Strömung drosseln oder absperren können. Hierdurch können Druckverluste bei einer nachfolgenden Umlenkung des Strömungskanals 1 reduziert werden. Auch kann die asynchrone Verstellung zur Erzeugung einer Drallströmung genutzt werden. Darüber hinaus kann eine derartige Drosselung für eine gezielte und richtungsgebundene Erzeugung einer Strömung genutzt werden. Figur 6 zeigt die Stellelemente 2 sowohl in Stellung I - ZU - als auch in Stellung II - AUF. Figur 7 zeigt die Stellelemente 2 in Stellung I - ZU.

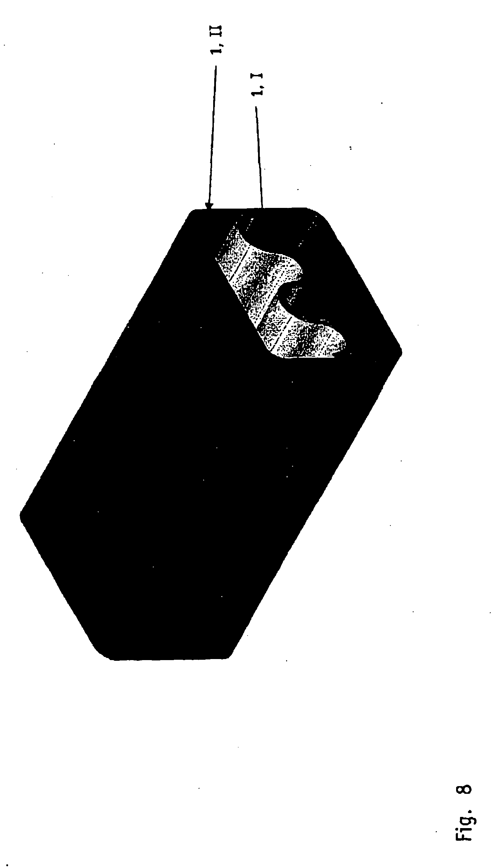

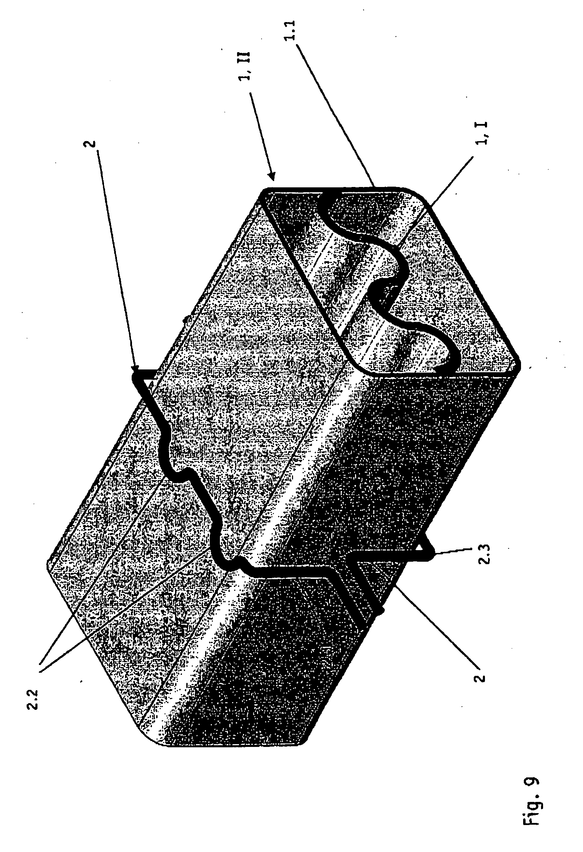

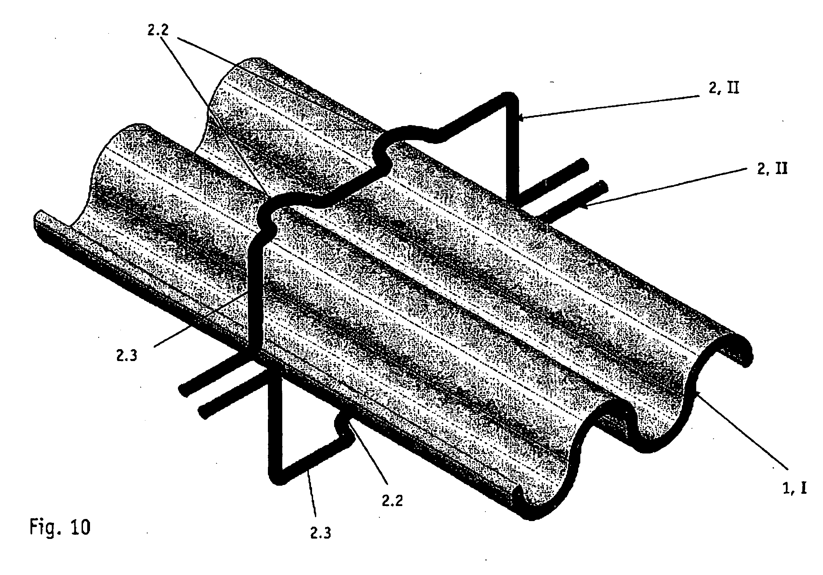

Figuren 8 bis 10 zeigt in perspektivischer Darstellung einen Strömungskanal 1 mit einem rechteckigen Kanalquerschnitt und entsprechend ausgebildete und erfindungsgemäß miteinander korrespondierende Stellelemente 2, die für eine bogenförmige Einschnürung des Strömungskanals 1 einen entlang der Außenfläche des Strömungskanals 1, im wesentlichen u-förmig verlaufenden Abschnitt 2.3 aufweisen. Der jeweilige u-förmige Abschnitt 2.3 verläuft entlang eines halben Umfangs des Strömungskanals 1, so dass im zusammengesetzten Zustand in der Stellung II sich ein rechteckförmiger Querschnitt ergibt. Auf der Oberseite bzw. auf der Unterseite des Strömungskanals 1 weist der betreffende Abschnitt 2.3 des Stellelements 2 zwei bogenförmige Ausbuchtungen 2.2 auf. Die jeweiligen Abschnitte 2.3 in der Stellung II und die Ausbuchtungen 2.2 in der Stellung I liegen weitgehend formschlüssig am Strömungskanal 1. Die Ausbuchtungen 2.2 eines Stellelements 2 liegen parallel nebeneinander, wobei die jeweiligen Ausbuchtungen 2.2 der gegenüberliegenden Stellelemente 2 zueinander versetzt angeordnet sind. Figur 8 zeigt den Strömungskanal 1 in der vollständig geöffneten Stellung II und in der vollständig geschlossenen Stellung I, d.h. im eingeschnürten Zustand. Figur 9 zeigt die den Strömungskanal 1 vollständig umgebende Vorrichtung, die zwei gegenüberliegend angeordnete Stellelemente 2 umfasst. In Figur 9 sind die Stellelemente 2 in geöffneter Stellung II gezeigt. Figur 10 zeigt den vollständig eingeschnürten Strömungskanal 1 in der vollständig geschlossenen Stellung I und das obere und das untere Stellelement 2 in der geöffneten Stellung II. Durch synchrones oder asynchrones Drehen bzw. Schwenken der beiden Stellelemente 2 zur Strömungskanalmitte hin wird der Strömungskanal 1 abgedrückt bzw. bis hin zum vollständigen Verschluss in der Stellung I bedingt durch die bogenförmigen Ausbuchtungen 2.2 bogen- bzw. wellenförmig eingeschnürt. Der Tragkanal 3 ist nicht dargestellt.

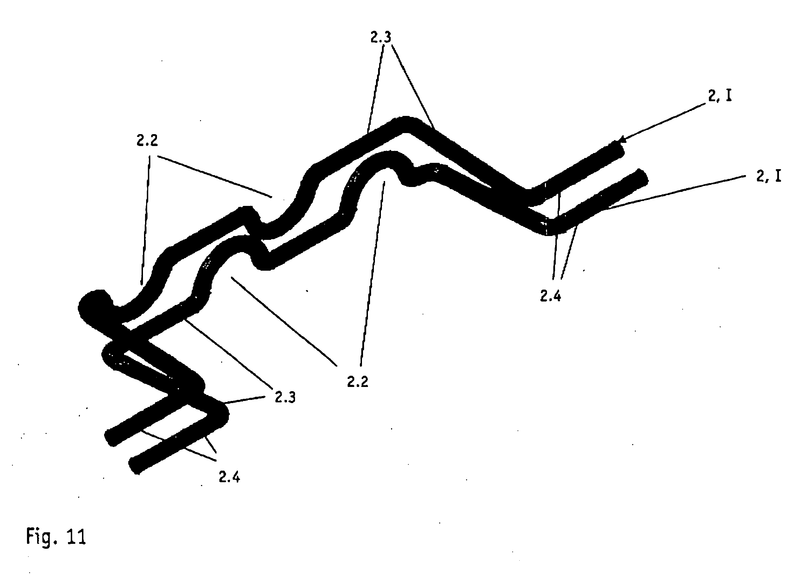

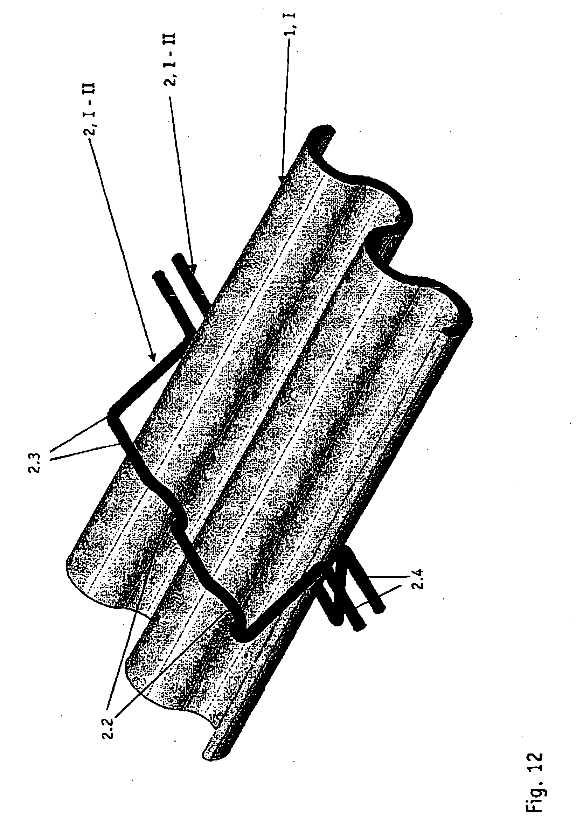

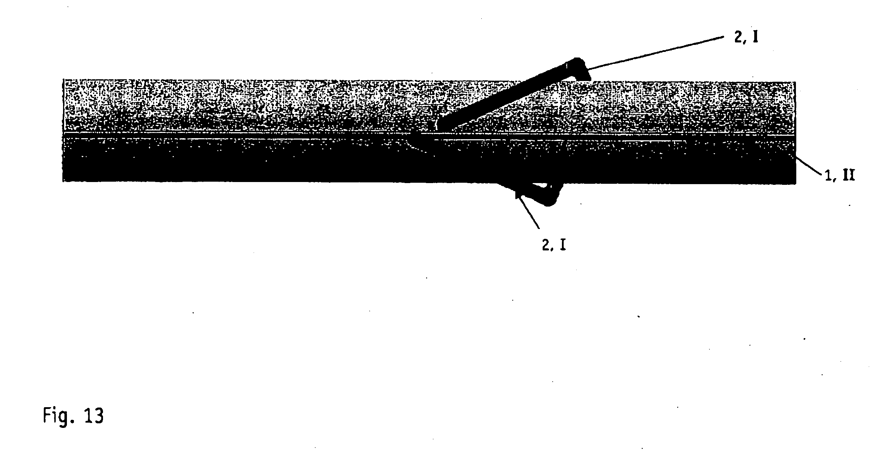

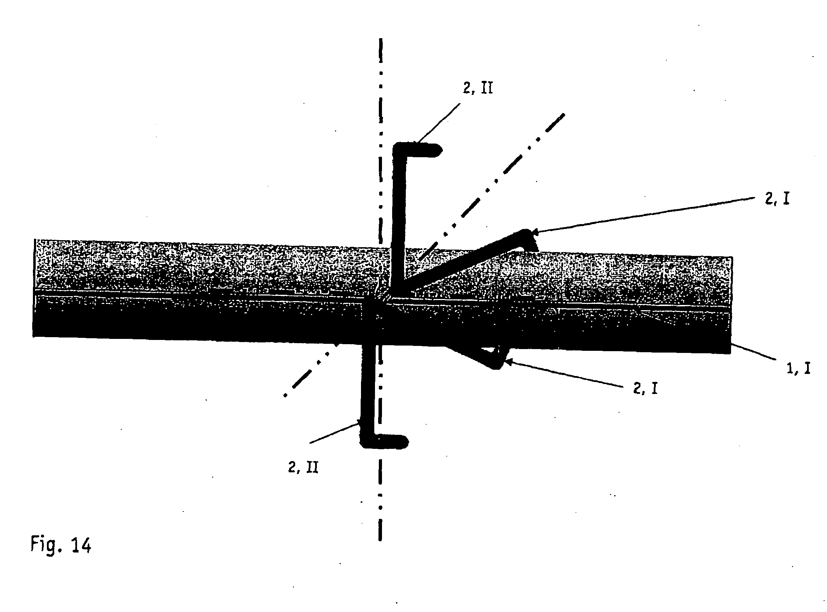

Figuren 11 bis 14 zeigen in perspektivischer Darstellung eine aus zwei Stellelementen 2 gebildete Vorrichtung für einen rechteckförmigen Strömungskanal 1. Figur 11 zeigt im Detail die miteinander korrespondierenden Stellelemente 2 mit den versetzt zueinander angeordneten Ausbuchtungen 2.2 in der vollständig geschlossenen Stellung I. Der zwischen den beiden Stellelementen 2 eingeschnürte Strömungskanal 1 ist zur besseren Übersicht nicht dargestellt. Mindestens ein oder beide Bügelenden 2.4 des jeweiligen Stellelements 2 sind abgewinkelt, so dass an dieses Ende in nicht näher dargestellter Art und Weise ein Antrieb eingreifen kann. Die abgewinkelten Bügelenden 2.4 sind in nicht näher dargestellter Art und Weise in Öffnungen des Tragkanals 3 schwenkbar oder drehbar oder linear bewegbar gehalten. Das jeweilige Stellelement 2 ist als ein gebogener Metall-, insbesondere Drahtbügel mit weitgehend geraden Abschnitten 2.3 und Ausbuchtungen 2.2 ausgeführt. Auch kann das Stellelement 2 als ein Kunststoffformteil, insbesondere aus einem Polymerwerkstoff ausgebildet sein. Figur 12 zeigt das obere und das untere Stellelement 2 in der geschlossenen Stellung I und den zwischen diesen angeordneten wellenförmig eingeschnürten Strömungskanal 1. Figur 13 zeigt den Strömungskanal 1 mit dem oberen und unteren Stellelement 2 in der geschlossenen Stellung I, d.h. der Strömungskanal 1 wird zwischen den beiden Stellelementen 2 eingeschnürt. Dabei können in Strömungsrichtung auch mehrere Paare von Stellelementen 2 hintereinander in Art einer Labyrinthdichtung angeordnet sein. In Figur 14 ist der in Strömungsrichtung horizontale Versatz der Achspositionen der gegenüberliegenden Stellelemente 2 nochmals verdeutlicht dargestellt. Eine derartige versetzte Anordnung des oberen Stellelements 2 zum unteren Stellelement 2 bewirkt eine höhere Dichtheit in Art einer Labyrinthdichtung, da jedes Stellelement 2 um einen größeren Winkelweg verschwenkt werden kann, als bei übereinanderliegenden Achsen. Der Strömungskanal 1 wird durch das Zusammenschwenken der Stellelemente 2 nicht nur zwischen diesen eingepresst, sondern auch verwunden. In diesem Ausführungsbeispiel können das obere und das untere Stellelement 2 baugleich ausgeführt werden.

Alternativ können wie in den vorangegangenen Figuren gezeigt, das obere und das untere Stellelement 2 vertikal übereinander angeordnet sein. In diesem Fall wird der Strömungskanal 1 durch eine Drehung um maximal 90° der Stellelemente 2 aufeinander zu vollständig eingeschnürt.

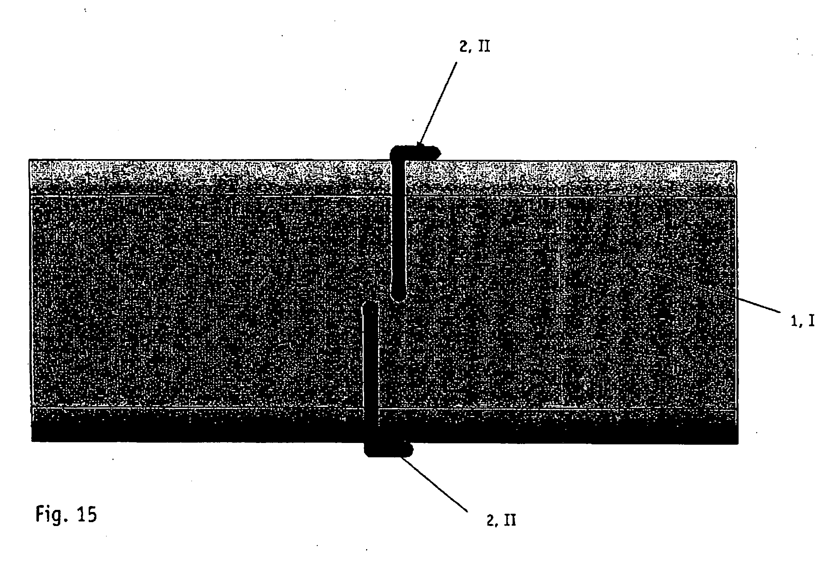

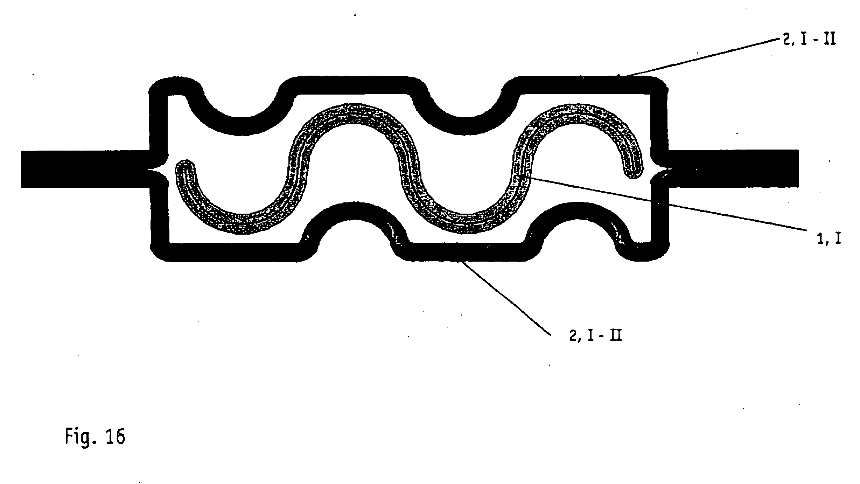

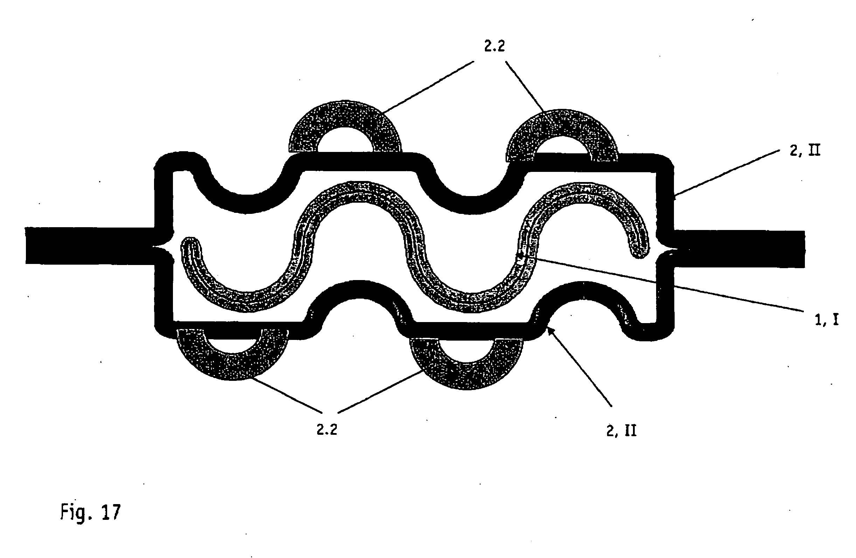

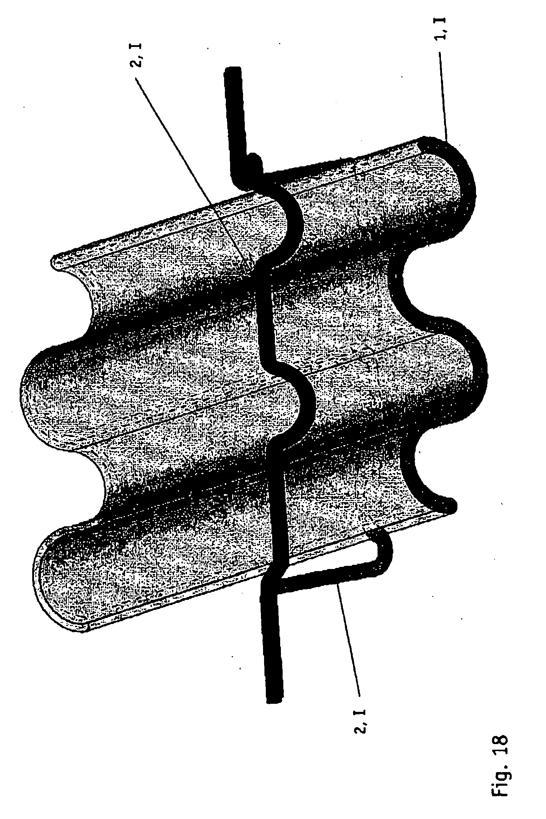

Figuren 15 bis 18 zeigen weitere Ausführungsformen für eine aus zwei Stellelementen 2 gebildete Vorrichtung für einen rechteckigen Strömungskanal 1 in verschiedenen Ansichten. In Figur 15 ist eine Seitenansicht gezeigt mit dem oberen und dem unteren Stellelement 2 in der vollständig geöffneten Stellung II und den vollständig geöffneten Strömungskanal 1. Die beiden Stellelemente 2 sind horizontal versetzt zueinander angeordnet. Figur 16 zeigt einen Querschnitt durch einen vollständig eingeschnürten Strömungskanal 1 mit zwei zumindest teilweise geöffneten Stellelementen 2. In Figur 17 sind weitere alternative Ausführungsformen für die Ausbuchtungen 2.2 der Stellelemente 2 gezeigt. Figur 18 zeigt eine perspektivische Ansicht auf den eingeschnürten Strömungskanal 1 mit den zumindest teilweise geschlossenen Stellelementen 2.

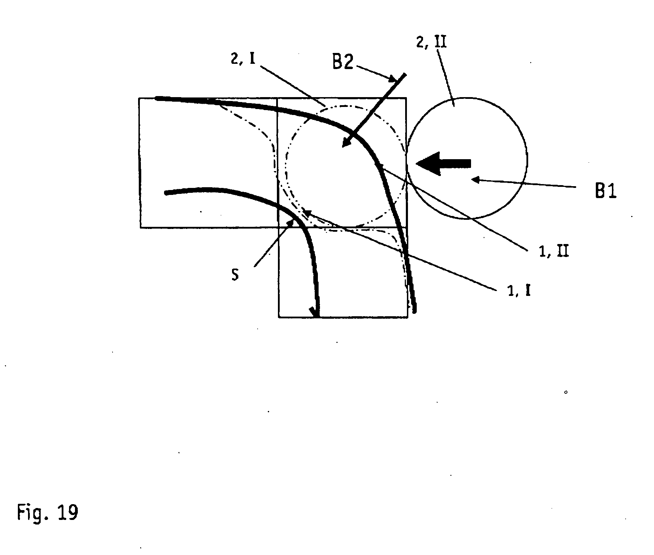

Figur 19 zeigt im Querschnitt eine Anordnung eines nicht erfindungsgemäßen Stellelements 2 in einem Umlenkungsbereich des Strömungskanals 1 in der vollständig geschlossenen Stellung I und der zugehörigen Einschnürstelle S (gestrichelte Darstellung) und in der vollständig geöffneten Stellung II (in der Vollliniendarstellung). In dieser Ausführungsform wird das Stellelement 2 zumindest teilweise linear mit den Bewegungen B1 und B2 bewegt.

## Patentansprüche

1. Vorrichtung zur Steuerung einer Strömung durch einen aus einem verformbaren Material gebildeten Strömungskanal (1), insbesondere eines Luftführungskanals einer Klimaanlage in einem Fahrzeug, wobei mindestens zwei zueinander korrespondierende, um jeweils eine Achse dreh- oder schwenkbar gelagerte, Stellelemente {2} vorgesehen sind, die zwischen einer ersten vollständig schließenden Endlagenstellung (I) und einer zweiten vollständig öffnenden Endlagenstellung (II) in eine beliebige Zwischenstellung stellbar sind und die zur Einstellung der Strömungsmenge durch den Strömungskanal (1) dessen Querschnitt bogenförmig einschnüren, wobei die Stellelemente (2) in der ersten vollständig schließenden Endlagenstellung (I) weitgehend formschlüssig und in der zweiten vollständig öffnenden Endlagenstellung (II) mit einem zumindest dem Querschnitt des Strömungskanals (1) entsprechenden Abstand zueinander angeordnet sind **dadurch gekennzeichnet, dass** die Achspositionen der Stellelemente in Strömungsrichtung des Strömungskanals (1) einen Versatz aufweisen.

2. Vorrichtung nach Anspruch 1, wobei die Stellelemente (2) als Bügelelemente mit mindestens einem oder mehreren bogenförmigen, parallel nebeneinander liegenden Abschnitten (2.1) ausgebildet sind.

3. Vorrichtung nach einem der vorhergehenden Ansprüche, wobei die zwei Stellelemente (2) synchron oder asynchron zueinander zur Strömungskanalmitte hin bewegbar angeordnet sind.

4. Vorrichtung nach einem der vorhergehenden Ansprüche, wobei die Stellelemente (2) in der Wand eines den Strömungskanal (1) umgebenden Tragkanals (3) gehalten, insbesondere angelenkt sind.

5. Vorrichtung nach Anspruch 4, wobei die Stellelemente (2) zumindest an einem als Achsteil dienenden und insbesondere abgewinkelten Bügelende (2.4) mit einem außerhalb des Tragkanals (3) angeordneten Antrieb verbunden sind.

6. Vorrichtung nach einem der vorhergehenden Ansprüche, wobei die Stellelemente (2) in den Strömungskanal (1) integriert, insbesondere in dessen Wandung (1.1) eingebettet sind.

7. Vorrichtung nach einem der vorhergehenden Ansprüche, wobei die Stellelemente (2) den Strömungskanal (1) zumindest teilweise oder vollständig umgebend angeordnet sind.

8. Vorrichtung nach einem der vorhergehenden Ansprüche, wobei die Stellelemente (2) formschlüssig an der äußeren Wandung (1.1) des Strömungskanals (1) anliegen.

9. Vorrichtung nach Anspruch 8, wobei die Stellelemente (2) in einem Freiraum (4) zwischen dem Strömungskanal (1) und einem äußeren Trägerkanal (3) angeordnet sind.

10. Vorrichtung nach einem der vorhergehenden Ansprüche, wobei die Stellelemente (2) eine Kontur aufweisen, die der Querschnittsform des Strömungskanals (1) in der zweiten vollständig öffnenden Endlagenstellung (II) weitgehend entspricht.

11. Vorrichtung nach einem der vorhergehenden Ansprüche, wobei in Strömungsrichtung mehrere Paare von Stellelementen (2) hintereinander angeordnet sind.

12. Vorrichtung nach einem der vorhergehenden Ansprüche, wobei die Stellelemente (2) in einem geradlinig verlaufenden Bereich, einem Umlenkungsbereich, einem Eintrittsbereich und/oder einem Austrittsbereich des Strömungskanals (1) angeordnet sind.

13. Vorrichtung nach einem der vorhergehenden Ansprüche, wobei die Stellelemente (2) aus einem weitgehend formfesten Material, insbesondere einem Metall oder einem Polymerwerkstoff gebildet sind.

14. Vorrichtung nach einem der vorhergehenden Ansprüche, wobei die Stellelemente (2) aus einem rohrförmigen Hohl- oder Vollprofil gebildet sind.

15. Vorrichtung nach einem der vorhergehenden Ansprüche, wobei die Stellelemente (2) zumindest geringfügig elastisch sind.

16. Vorrichtung nach einem der vorhergehenden Ansprüche, wobei der Strömungskanal (1) eine runde, eine rechteckige oder eine polygonale Querschnittsform mit vorzugsweise zwei Symmetrieachsen aufweist.

17. Vorrichtung nach einem der vorhergehenden Ansprüche, wobei der Strömungskanal (1) aus einer Folie, einem Gewebe und/oder einer netzförmigen Struktur ein- oder mehrlagig gebildet ist.

18. Vorrichtung nach einem der vorhergehenden Ansprüche, wobei der Strömungskanal (1) aus einem derartigen Material gebildet ist, das beim Lösen der Einschnürung selbsttätig in die Ausgangslage zurückgeht.

19. Vorrichtung nach einem der vorhergehenden Ansprüche, wobei der Strömungskanal (1) durch Bewegen der Stellelemente (2) in die zweite vollständig öffnende Endlagenstellung (11) selbsttätig öffnet oder über Luftdruck oder über Formschluss mit den Stellelementen (2) in seine Ausgangslage zurückgeht.

20. Vorrichtung nach einem der vorhergehenden Ansprüche, wobei der Strömungskanal (1) mit einer oder mehreren Falten, insbesondere u-förmige, z-förmige oder w-förmige Falten, versehen ist.

## Claims

1. A device for controlling a flow through a flow channel (1) formed of a deformable material, in particular an air-guiding channel of an air-conditioning system in a motor vehicle, wherein at least two mutually corresponding adjusting elements (2) which are supported such that each can be rotated or swiveled about an axis are provided, and which can be adjusted in any intermediate position between a first fully closing end position setting (I) and a second fully opening end position setting (II), and which constrict the cross section of flow channel (1) in a curved manner to adjust the flow rate through the flow channel (1), wherein, in the first fully closing end position setting (I), the adjusting elements (2) are disposed relative to each other in a largely form-fit manner, and, in the second fully opening end position setting (II), are disposed relative to each other at a distance that corresponds at least to the cross section of the flow channel (1) **characterized in that** the axial positions of the adjusting elements are offset in the flow direction of the flow channel (1).

2. The device according to claim 1, wherein the adjusting elements (2) are designed as bracket elements having at least one or a plurality of curved sections (2.1) situated next to each other in parallel.

3. The device according to one of the preceding claims, wherein the two adjusting elements (2) are disposed such that they can move synchronously or asynchronously relative to each other toward the center of the flow channel.

4. The device according to one of the preceding claims, wherein the adjusting elements (2) are held in the wall of a carrier channel (3) that encloses the flow channel (1), in particular being hinge-mounted.

5. The device according to claim 4, wherein the adjusting elements (2) are connected to a drive disposed outside of the carrier channel (3), at least on one bracket end (2.4) that is used as an axial part and is angled in particular.

6. The device according to one of the preceding claims, wherein the adjusting elements (2) are integrated in the flow channel (1), in particular in its wall (1.1).

7. The device according to one of the preceding claims, wherein the adjusting elements (2) are disposed such that they at least partially or completely enclose the flow channel (1).

8. The device according to one of the preceding claims, wherein the adjusting elements (2) bear against the outer wall (1.1) of the flow channel (1) in a form-fit manner.

9. The device according to claim 8, wherein the adjusting elements (2) are disposed in an open space (4) between the flow channel (1) and an outer carrier channel (3).

10. The device according to one of the preceding claims, wherein the adjusting elements (2) have a contour that largely corresponds to the cross-sectional shape of the flow channel (1) in the second fully opening end position setting (II).

11. The device according to one of the preceding claims, wherein a plurality of pairs of adjusting elements (2) are disposed one behind the other in the flow direction.

12. The device according to one of the preceding claims, wherein the adjusting elements (2) are disposed in a region that extends in a straight line, in a deflection region, an inlet region and/or an outlet region of the flow channel (1).

13. The device according to one of the preceding claims, wherein the adjusting elements (2) are formed of a largely inelastic material, in particular a metal or a polymer material.

14. The device according to one of the preceding claims, wherein the adjusting elements (2) are formed of a tubular hollow or full profile.

15. The device according to one of the preceding claims, wherein the adjusting elements (2) are at least slightly elastic.

16. The device according to one of the preceding claims, wherein the flow channel (1) has a round, rectangular, or polygonal cross-sectional shape having preferably two axes of symmetry.

17. The device according to one of the preceding claims, wherein the flow channel (1) is formed of a sheet, a fabric, and/or a netlike structure, in one or more layers.

18. The device according to one of the preceding claims, wherein the flow channel (1) is formed of a material that automatically returns to its starting position when the constriction is released.

19. The device according to one of the preceding claims, wherein the flow channel (1) opens automatically when the adjusting elements (2) are moved into the second fully opening end position setting (II), or returns to its starting position using air pressure or a form-fit connection with the adjusting elements (2).

20. The device according to one of the preceding claims, wherein the flow channel (1) is provided with one or more folds, in particular u-shaped, z-shaped, or w-shaped folds.

## Revendications

1. Dispositif servant à la régulation d'un écoulement à travers un conduit d'écoulement (1) formé par un matériau déformable, en particulier un conduit de guidage d'air d'un système de climatisation dans un véhicule, où il est prévu au moins deux actionneurs (2) se correspondant l'un l'autre et montés, respectivement, de façon à pouvoir tourner ou pivoter autour d'un axe, actionneurs qui sont réglables dans une position intermédiaire quelconque, entre une première position de fin de course (I) se fermant complètement, et une deuxième position de fin de course (II) s'ouvrant complètement et qui, pour le réglage du débit d'écoulement à travers le conduit d'écoulement (1), étranglent sa section, de façon arquée, où les actionneurs (2), dans la première position de fin de course (I) se fermant complètement, sont disposés en étant dans une large mesure associés par complémentarité de forme et, dans la deuxième position de fin de course (II) s'ouvrant complètement, disposés l'un par rapport à l'autre avec un intervalle correspondant au moins à la section du conduit d'écoulement (1),
**caractérisé en ce que** les positions d'axe des actionneurs présentent un décalage dans la direction d'écoulement du conduit d'écoulement (1).

2. Dispositif selon la revendication 1, où les actionneurs (2) sont configurés comme des éléments à étrier comportant au moins une ou plusieurs parties (2.1) de forme arquée et disposées parallèlement les unes à côté des autres.

3. Dispositif selon l'une ou l'autre des revendications précédentes, où les deux actionneurs (2), synchrones ou asynchrones l'un par rapport à l'autre, sont disposés en étant mobiles par rapport au centre du conduit d'écoulement.

4. Dispositif selon l'une quelconque des revendications précédentes, où les actionneurs (2) sont maintenus, en particulier articulés dans la paroi d'une gaine support (3) entourant le conduit d'écoulement (1).

5. Dispositif selon la revendication 4, où les actionneurs (2) sont reliés, au moins au niveau d'une extrémité d'étrier (2.4) servant de partie d'axe et en particulier coudée, à un mécanisme de commande disposé à l'extérieur de la gaine support (3).

6. Dispositif selon l'une quelconque des revendications précédentes, où les actionneurs (2) sont intégrés dans le conduit d'écoulement (1), en particulier noyés dans sa paroi (1.1).

7. Dispositif selon l'une quelconque des revendications précédentes, où les actionneurs (2) sont disposés en entourant le conduit d'écoulement (1), au moins en partie ou en totalité.

8. Dispositif selon l'une quelconque des revendications précédentes, où les actionneurs (2) sont en appui, par complémentarité de forme, sur la paroi extérieure (1.1) du conduit d'écoulement (1).

9. Dispositif selon la revendication 8, où les actionneurs (2) sont disposés dans un espace libre (4) compris entre le conduit d'écoulement (1) et une gaine support extérieure (3).

10. Dispositif selon l'une quelconque des revendications précédentes, où les actionneurs (2) présentent un contour qui, dans une large mesure, correspond à la forme de section du conduit d'écoulement (1), dans la deuxième position de fin de course (II) s'ouvrant complètement.

11. Dispositif selon l'une quelconque des revendications précédentes, où plusieurs paires d'actionneurs (2) sont disposées les unes derrière les autres, dans la direction de l'écoulement.

12. Dispositif selon l'une quelconque des revendications précédentes, où les actionneurs (2) sont disposés dans une zone s'étendant de façon rectiligne, dans une zone de déviation, dans une zone d'entrée et / ou dans une zone de sortie du conduit d'écoulement (1).

13. Dispositif selon l'une quelconque des revendications précédentes, où les actionneurs (2) sont formés dans un matériau dans une large mesure indéformable, en particulier un métal ou un matériau à base de polymères.

14. Dispositif selon l'une quelconque des revendications précédentes, où les actionneurs (2) sont formés par un profilé creux ou plein, de forme tubulaire.

15. Dispositif selon l'une quelconque des revendications précédentes, où les actionneurs (2) sont au moins faiblement élastiques.

16. Dispositif selon l'une quelconque des revendications précédentes, où le conduit d'écoulement (1) présente une forme de section ronde, rectangulaire ou polygonale comportant, de préférence, deux axes de symétrie.

17. Dispositif selon l'une quelconque des revendications précédentes, où le conduit d'écoulement (1) est formé d'une feuille, d'un tissu et / ou d'une structure réticulaire, en une ou plusieurs couches.

18. Dispositif selon l'une quelconque des revendications précédentes, où le conduit d'écoulement (1) est formé par un matériau de ce type qui, lorsque l'étranglement est relâché, revient automatiquement à la position initiale.

19. Dispositif selon l'une quelconque des revendications précédentes, où le conduit d'écoulement (1), par déplacement des actionneurs (2) dans la deuxième position de fin de course (II) s'ouvrant complètement, s'ouvre automatiquement, ou bien sous l'effet de la pression d'air ou par complémentarité de forme avec les actionneurs (2), revient dans sa position initiale.

20. Dispositif selon l'une quelconque des revendications précédentes, où le conduit d'écoulement (1) est doté d'un ou de plusieurs plis, en particulier de plis en forme de u, en forme de z ou en forme de w.
